# EUROPEAN PATENT APPLICATION

(11) **EP 3 211 878 A1**
(43) Date of publication of application: **30.08.2017**
(21) Application number: 16167483.3
(22) Date of filing: 28.04.2016
(51) Int. Cl.: H04N 5/225

(54) **NETWORK CAMERA WITH MANUALLY ADJUSTABLE SHOOTING ANGLE**

(30) Priority: 23.02.2016 TW 105105261
(71) Applicant: D-Link Corporation, Taipei City (TW)
(72) Inventor: LIN, Yen-Hung, Taipei City (TW)
(74) Representative: Karakatsanis, Georgios

(57) **Abstract**

The present invention is to provide a network camera with manually adjustable shooting angle which includes a base fastened on a plane, a main frame having a bottom end connected to the base and a positioning ring disposed on a top end thereof, and a camera device having a structure matching with the inner periphery of the positioning ring so as to be assembled with the main frame integrally and rotatably positioned in the positioning ring. The positioning ring has a plurality of first engagement parts disposed on an inner periphery thereof, and the camera device has at least one second engagement part which is disposed on a peripheral edge thereof and can be engaged with one of the first engagement parts, so as to make sure that the camera device can be manually adjusted to a normal shooting angle for capturing image having a normal view angle.

## Description

### FIELD OF THE INVENTION

The present disclosure generally relates to a network camera, more particularly to a network camera with a manually adjustable shooting angle and including a main frame and a camera device, wherein the camera device can be assembled with the main frame integrally and rotatably positioned in a positioning ring of the main frame, the positioning ring has a plurality of first engagement parts disposed on an inner periphery thereof, and the camera device has at least one second engagement part which is disposed on a peripheral edge thereof and can be engaged with one of the first engagement parts at different location. Therefore, the user can rotate the camera device manually to adjust the shooting angle thereof through engaging the second engagement part with the corresponding first engagement part to make sure that images captured by the camera device are all at a normal view angle.

### BACKGROUND OF THE INVENTION

In recent year, as microelectronic technology, information and communication technology are rapidly developed, various portable electronic devices enter into people's daily life gradually. When the speed of data communication becomes faster, it is possible for people to interconnect with a remote electronic device for instant control through internet network. With coming of the network generation, people's many life habits are changed greatly. A network camera, which is very popular in recent year, is taken as an example for illustration. The network camera can be mounted at a specific place (such as home) and used to instantly upload a captured image to internet network through wired or wireless network. When the user goes out, for example, travels abroad or stays in office, the user can obtain a current condition of the specific place through the network camera anytime and anywhere. For example, the user can watch family pet in real time through the network camera.

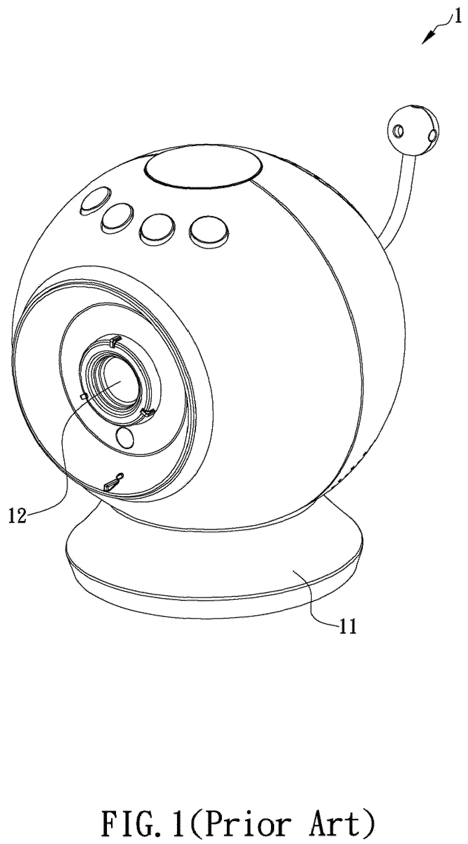

The network camera has advantages of small size, easy to mount and convenient transmission; however, as the network camera is more popular and widely applied in people's life, the inventor finds that some detail designs of the network camera may cause the user's inconvenience and affect usage experience in specific usage. Please refer to Fig. 1. In general, the network camera 1 has internal circuits (such as a network module or a power module), an antenna and various ports, and two main structures including a base 11 and a camera lens 12. The base 11 can be fastened on a support plane, for example, the base 11 can be placed on a desk plane horizontally, or locked on a ceiling or a wall. The camera lens 12 must be positioned to face a monitoring position (such as the entrance, the pet basket, or patient's bed) where the user desires to capture image. While mounting the network camera 1, the user must place the network camera 1 on a proper support plane according to the monitoring position, to make sure the camera lens 12 to capture images of whole monitoring position clearly.

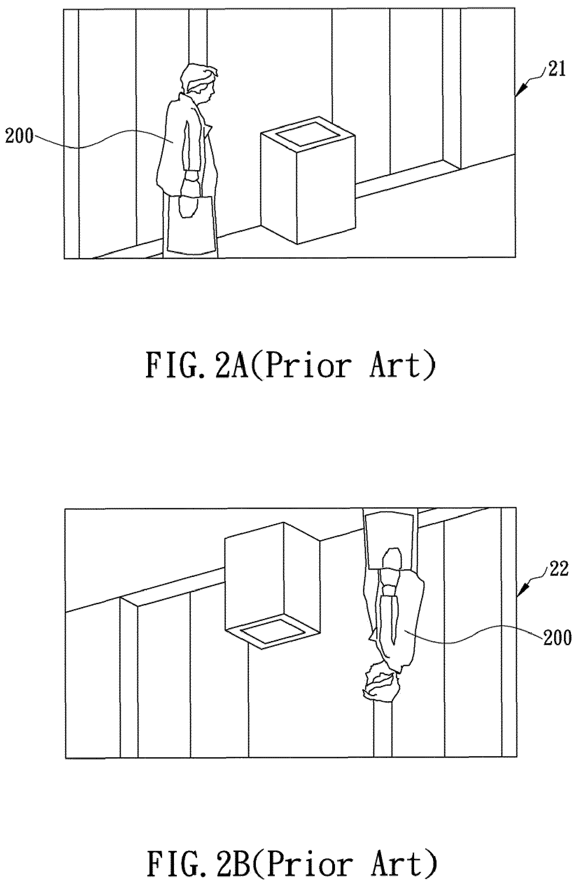

Please refer to Figs. 1, 2A and 2B. When the base 11 is horizontally placed on the desk, a shooting angle of the camera lens 12 is the same as the user's view direction, as shown in Fig. 2A , the monitor image 21 captured by the camera lens 12, the person and object 200 in the image can be shown in a normal view angle. Under a condition that there is no flat space on the ground or the network camera mounted on the ground is easy to cause obstruction for walking, the user may lock the base 11 on the ceiling; however, as shown in Fig. 2B, the shooting angle of the camera lens 12 is upside-down, so the monitoring image 22 captured by the camera lens 12 is shown in an upside-down view angle, and showing locations and angles of the person and object 200 in the monitoring image are opposite to an normal view angle and inconvenient for user to view.

According above description, it is obvious that the camera lens 12 cannot determine the user's desired shooting angle, and the problem illustrated in Fig. 2B occurs when the network camera 1 is mounted at special angle, for example, the network camera 1 is mounted on the ceiling or locked on the wall. Most commercially available network cameras still have the problem, so the user must manually change the angle of the monitoring image by using playback software installed on a terminal device. Some network camera products are provided with sensing devices (such as gravity sensors) inside to determine a current direction of gravity, so that the network camera can adjust the captured image according to the current direction of gravity and then upload the adjusted image to internet network. However, the additional sensing device may greatly increase production cost and power consumption of the network camera, and reduce design flexibility of the network camera, for example, the interior space of the network camera may be reduced because of the additional sensing device. Apparently, the additional sensing device is not a perfect solution for aforesaid problem illustrated in Fig. 2B.

Therefore, what is need is to improve the conventional network camera without greatly increasing volume and cost thereof, and the improved network camera can solve the problem that the camera lens may capture an image with an abnormal view angle when the network camera is mounted at the special shooting angle.

### SUMMARY OF THE INVENTION

In order to solve the problem that the network camera cannot determine the user's desired shooting angle so usually capture the image with the abnormal view angle when the network camera is mounted at special shooting angle, according to multiple tests, and long-term study and experience in designing product the inventor designs a network camera with manually adjustable shooting angle, so as to facilitate the user to adjust the shooting angle of the network camera by manually rotating the network camera.

An objective of the present disclosure is to provide a network camera with manually adjustable shooting angle. The network camera includes a base, a main frame and a camera device. The base is fastened on a plane. The main frame has a bottom end connected to the base and a positioning ring disposed on a top end thereof. The positioning ring has a plurality of first engagement parts disposed on an inner periphery thereof. The camera device has a structure matching with the inner periphery of the positioning ring, so as to be assembled with the main frame integrally and rotatably positioned in the positioning ring. The camera device has at least one camera lens configured to capture image and the captured image is transmitted to internet network by a wired or wireless manner. The camera device has at least one second engagement part disposed on a peripheral edge thereof. Under a condition that the second engagement part is engaged into one of the plurality of the first engagement parts on the positioning ring, the camera device is fixed in the positioning ring and the camera lens is kept at a shooting angle (that is, when the base is fastened on the ground, the image captured by the camera lens is kept at the normal view angle). Under a condition that the camera device is rotated by an external force and the second engagement part is deformed to escape from the first engagement part, the camera device is rotated about a center of the positioning ring, and after the second engagement part is moved to be engaged with another first engagement part, the camera device is fixed in the positioning ring again to keep the camera lens at another shooting angle. An angle difference between the two shooting angles is equal to an angle interval between the two adjacent first engagement parts. Therefore, the user can rotate the camera device manually to adjust the shooting angle of the camera lens to make sure the captured image with the normal view angle, so that the user does not need to operate the playback software to change the angle of the captured image while viewing the capture image later.

According to one exemplary embodiment of the present disclosure, the camera device further includes a back cover, a camera module and a front cover. The back cover has a receiving groove recessed at an inner side thereof, and a plurality of first fastening parts disposed thereon and adjacently to a peripheral edge thereof. The camera module is mounted in the receiving groove and at least includes the camera lens and a network unit which is electrically connected to the camera lens and configured to upload the image captured by the camera lens to internet network. The front cover has a structure matching with the back cover, and is configured to be positioned on the inner side of the back cover to shield the receiving groove. The front cover has a camera hole disposed at an outer side thereof and corresponding in position to the camera lens, and the second engagement part and a plurality of second fastening parts disposed on an inner side thereof and adjacently to a peripheral edge thereof, and extended towards the back cover. An extension length of each of the second fastening parts is larger than that of the second engagement part. Under a condition that the plurality of first fastening parts and the plurality of second fastening parts are fastened with each other to assemble the front cover and the back cover integrally, the camera device is rotatably positioned in the positioning ring, and the second engagement part is exposed to the peripheral edge of the camera device.

### BRIEF DESCRIPTION OF THE DRAWINGS

The detailed structure, operating principle and effects of the present disclosure will now be described in more details hereinafter with reference to the accompanying drawings that show various embodiments of the present disclosure as follows.
Fig. 1 is a schematic view of a conventional network camera.
Fig. 2A is a schematic view of a monitoring image captured by the network camera
Fig. 2B is other schematic view of the monitoring image captured by the network camera.
Fig. 3 is an exploded view of the network camera of the present disclosure.
Fig. 4 is other exploded view of the network camera of the present disclosure.
Fig. 5 is a schematic view of a camera device of the network camera of the present disclosure.
Fig. 6 is a schematic view of a base and a main frame of the network camera of the present disclosure.

### DETAILED DESCRIPTION OF THE PREFERRED EMBODIMENTS

Reference will now be made in detail to the exemplary embodiments of the present disclosure, examples of which are illustrated in the accompanying drawings. Therefore, it is to be understood that the foregoing is illustrative of exemplary embodiments and is not to be construed as limited to the specific embodiments disclosed, and that modifications to the disclosed exemplary embodiments, as well as other exemplary embodiments, are intended to be included within the scope of the appended claims. These embodiments are provided so that this disclosure will be thorough and complete, and will fully convey the inventive concept to those skilled in the art. The relative proportions and ratios of elements in the drawings may be exaggerated or diminished in size for the sake of clarity and convenience in the drawings, and such arbitrary proportions are only illustrative and not limiting in any way. The same reference numbers are used in the drawings and the description to refer to the same or like parts.

It will be understood that, although the terms 'first', 'second', 'third', etc., may be used herein to describe various elements, these elements should not be limited by these terms. The terms are used only for the purpose of distinguishing one component from another component. Thus, a first element discussed below could be termed a second element without departing from the teachings of embodiments. As used herein, the term "or" includes any and all combinations of one or more of the associated listed items.

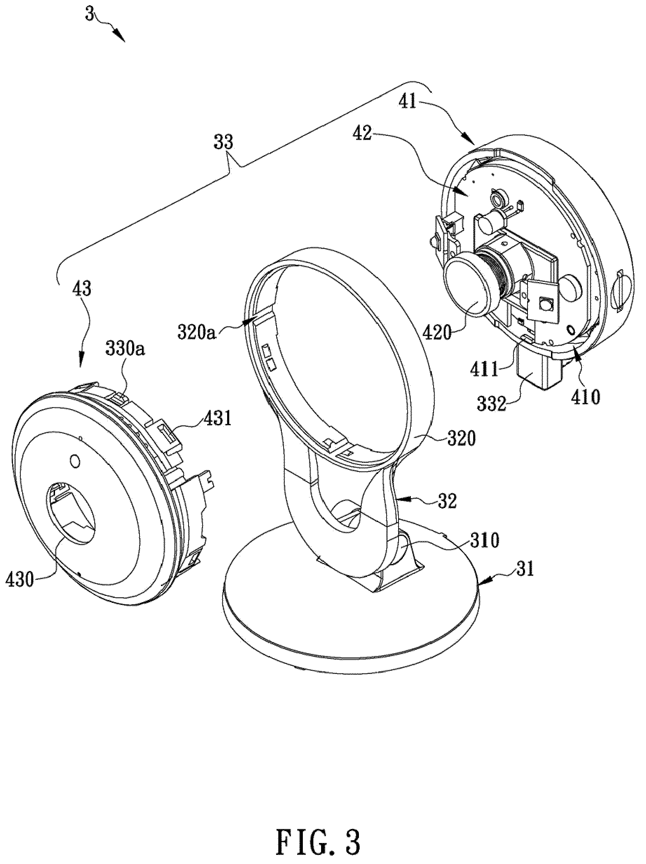

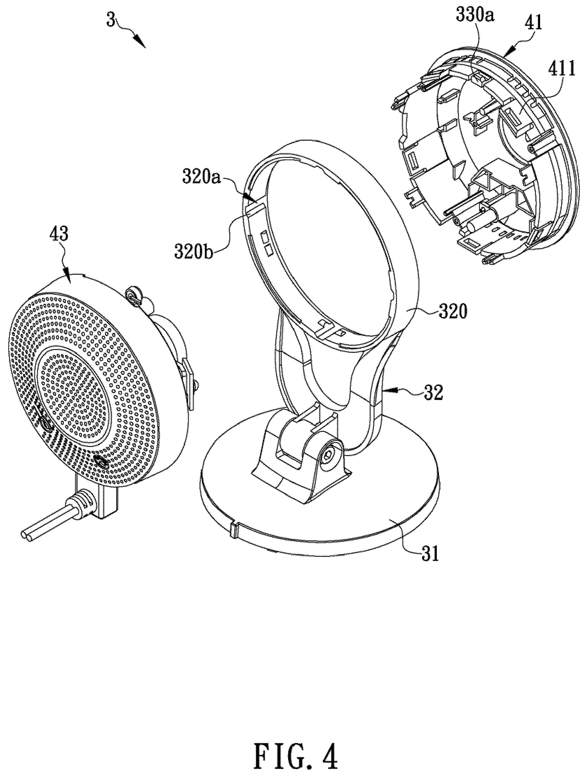

The present disclosure provides a network camera with manually adjustable shooting angle. Please refer to Figs. 3 through 5 which show a first embodiment of the present disclosure. The network camera 3 includes a base 31, a main frame 32 and a camera device 33. The base 31 has a smooth bottom surface and can be placed on a horizontal plane stably. The base 31 further has a locking hole or adhesive member disposed at a bottom thereof, to enable a user to fix the base 31 on a support plane (such as a wall, ceiling and so on) with a special angle.

A bottom end of the main frame 32 is pivotally connected on a pivoting part 310 of the base 31, so that the main frame 32 is rotatable about the pivoting part 310. Alternatively, the main frame 32 can directly fastened on the base 31. The main frame 32 has a positioning ring 320 disposed at a top end thereof, and the positioning ring 320 has a plurality first engagement parts 320a disposed on an inner periphery thereof. In the first embodiment, the first engagement part 320a is a groove.

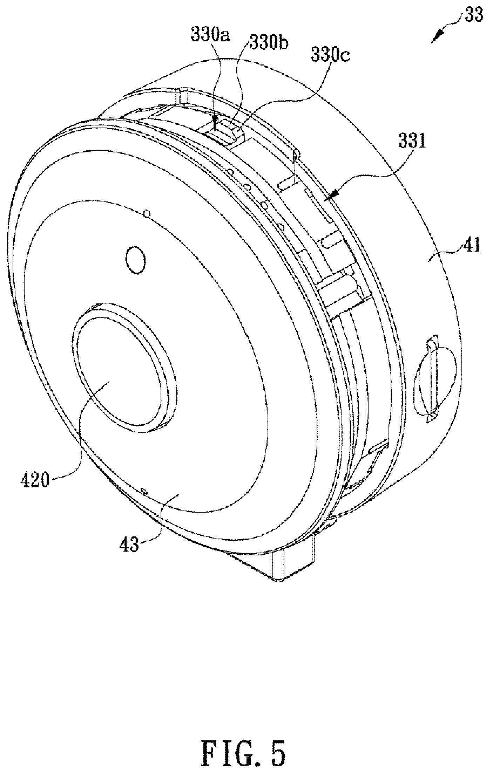

The camera device 33 has a peripheral edge matching with the inner periphery of the positioning ring 320 in structure (as shown in Fig. 5 which is a schematic view of assembly of the camera device 33), so that the camera device 33 can be assembled into the positioning ring 320 and rotatable relative to the positioning ring 320. The camera device 33 at least includes a camera lens 420 configured to capture an external image with a shooting angle and the captured image is transmitted to internet network through a wireless or wired manner. The camera device 33 has at least one second engagement part 330a disposed on a peripheral edge thereof. For convenience in explanation, the term "shooting angle" is defined as an angle between direction of gravity and a facing direction of a bottom end of the camera lens 420. For example, when the bottom end of the camera lens 420 faces the ground, the shooting angle is the same as the user's view angle (that is, the image can be captured with a normal view angle). When the bottom end of the camera lens 420 faces the ceiling, the shooting angle is different from the user's view angle by 180 degrees.

The way of fastening and adjusting the camera device 33 and the positioning ring 320 is illustrated first, and the way of assembling the camera device 33 will be illustrated later. Please refer to Figs. 3 through 5. By movably inserting the camera device 33 into the positioning ring 320 to mount the second engagement part 330a in one of the first engagement parts 320a of the positioning ring 320, the camera device 33 can be combined with the main frame 32 integrally and fixed with the positioning ring 320 to keep the shooting angle of the camera lens 420. For example, under a condition that the bottom end of the camera lens 420 faces the base 31 and the base 31 is horizontally placed on the ground, the camera lens 420 can be kept at the normal view angle.

Under a condition that the base 31 is locked on the ceiling or wall and the user wants to change the shooting angle of the network camera 3, the user can grip the camera device 33 to rotate about the center of the positioning ring 320 and, meanwhile, the second engagement part 330a is deformed by an external force to escape from the engagement of the first engagement part 320a. In this situation, the camera device 33 is in a rotatable status, so that the user can rotate the camera device 33 about the center of the positioning ring 320, and the second engagement part 330a is then moved to engage with other first engagement part 320a of the positioning ring 320. By above-mentioned operation, the camera device 33 can be reseated at a new position with other shooting angle. For example, when the base 31 is locked on the ceiling, the user can rotate the camera device 33 to make the top end of the camera lens 420 face the base 31 (that is, the bottom end of the camera lens 420 faces the ground). Therefore, the camera lens 420 can still be kept at the normal view angle.

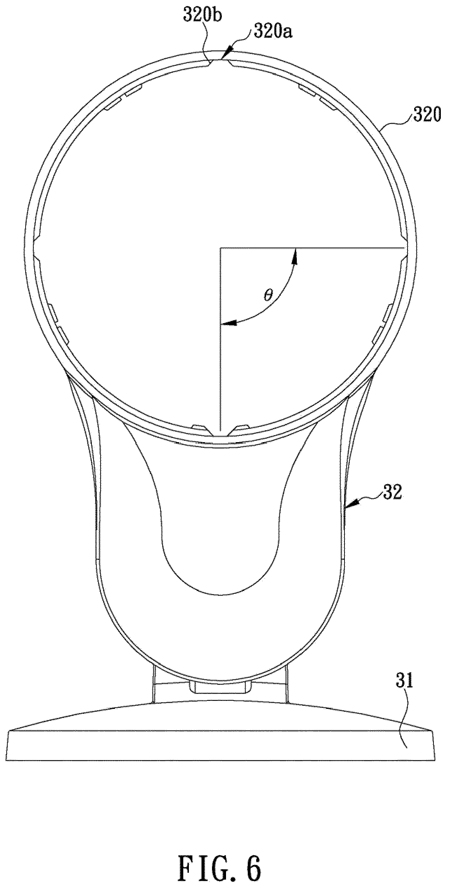

Please refer to Figs. 3 and 6. Quantities of the first engagement parts 320a and the second engagement part 330a can be changed upon demand, and an angle difference between different shooting angles at which the camera lens 420 is positioned is equal to the angle difference between two adjacent first engagement parts 320a. For example, under a condition that the positioning ring 320 has only two first engagement parts 320a differing from each other by 180 degrees, the network camera 3 can be adjusted to the normal view angle when being placed on the ground or locked on the ceiling. Please refer to Fig. 6. When the first engagement parts 320a are four in number, an angular interval θ between two adjacent first engagement parts 320a is 90 degrees, so that the user can rotate the network camera 3 by 90 degrees to adjust the shooting angle of the network camera 3 to the normal view angle when the network camera 3 is locked on the wall.

Please refer to Figs. 3 through 6. The shooting angle of the camera device 33 can be adjusted according to the angle difference between the engagement parts 320a and 330a, so the user can conveniently rotate the camera device 33 by hand to adjust the shooting angle of the camera lens 420 wherever the network camera 3 is mounted, for example, the network camera 3 can be mounted on the ground, the wall or the ceiling. Therefore, the captured image can be ensured to keep with the normal view angle, and the user does not need to operate the player software to transform the angle of the image while watching the captured image in future.

The assembly and internal structure of the camera device 33 are illustrated below. In the first embodiment, the camera device 33 includes a back cover 41, a camera module 42 and a front cover 43. The back cover 41 has a receiving groove 410 recessed on an inner side thereof, and a plurality of first fastening parts 411 disposed adjacently a peripheral edge thereof. The camera module 42 is mounted in the receiving groove 410 and at least includes the camera lens 420 and a network unit which is not shown in drawings and can be implemented by a chip in a circuit board. The network unit is electrically connected with the camera lens 420 and configured to upload an image captured by the camera lens 420 to internet network.

Please refer to Figs. 3 through 6. It should be noted that in the first embodiment the camera device 33 can be provided with a connection port, and a transmission line 332 can be inserted into the connection port to transmit data in a wired manner; alternatively, the camera device 33 can transmit data in a wireless manner by using wireless transmission technology (such as Wi-Fi). In addition, the camera module 42 can further be provided with common function modules, such as a power supply unit (such as a battery) or a processing unit. The processing unit can be used to compress the captured image. The technology of the present disclosure is mainly directed to improve the "assembly structure" of the network camera 3, but not change the circuit configuration and the function modules, so their descriptions are omitted.

The front cover 43 has a structure matching with the back cover 41, so that the front cover 43 can be positioned on the inner side of the back cover 41 to shield the receiving groove 410. The front cover 43 has a camera hole 430 disposed on an outer side thereof and corresponding in position to the camera lens 420, and the second engagement part 330a and a plurality of second fastening parts 431 disposed on an inner side thereof, adjacently to the peripheral edge thereof and extended towards the back cover 41. An extension length of each of the plurality of second fastening parts 431 is longer than that of the second engagement part 330a, and under a condition that the plurality of first fastening parts 411 and the plurality of second fastening parts 431 are engaged with each other to assemble the front cover 43 and the back cover 41 integrally, the camera device 33 can be rotated to position in the positioning ring 320, and the second engagement part 330a can be exposed out of the peripheral edge of the camera device 33, as shown in Fig. 5.

Compared with the peripheral edges of the front cover 43 and the back cover 41, the plurality of second fastening parts 431 and the second engagement part 330a are closer to the center of the camera device 33, so that under a condition that the front cover 43 and the back cover 41 are assembled integrally, a circular groove 331 can be recessed around the peripheral edge of the camera device 33 and have a structure matching with the inner periphery of the positioning ring 320, and the second engagement part 330a is exposed to the circular groove 331.

Please refer back to Figs. 3 through 6. In present embodiment, in order to make sure the smooth rotation of the camera device 33, each of the first engagement parts 320a is a groove in structure and the second engagement part 330a is a sheet in structure, and the sheet has an end fastened on the inner side of the front cover 43 and the other end movably extended towards the back cover 41, and an engagement member 330b protruded thereon. The first engagement part 320a has two guide bevels 320b respectively disposed at two corresponding side edges thereof, and the engagement member 330b of the second engagement part 330a has two press bevels 330c respectively disposed at two corresponding side edges thereof. The press bevel 330c has a structure matching with the guide bevel 320b. When the camera device 33 is rotated by the external force, the second engagement part 330a can be smoothly pressed along the direction of one of the guide bevels 320b to generate deformation.

The above-mentioned descriptions represent merely the exemplary embodiment of the present disclosure, without any intention to limit the scope of the present disclosure thereto. Various equivalent changes, alternations or modifications based on the claims of present disclosure are all consequently viewed as being embraced by the scope of the present disclosure.

## Claims

1. A network camera with a manually adjustable shooting angle (3), comprising:
a base (31) configured to be fastened on a plane;
a main frame (32) having a bottom end connected to the base (31), and a positioning ring (320) disposed on a top end thereof, and wherein the positioning ring (320) has a plurality of first engagement parts (320a) disposed on an inner periphery thereof; and
a camera device (33) having a structure matching with the inner periphery of the positioning ring (320), so as to be assembled with the main frame (32) integrally and rotatably positioned in the positioning ring (320), wherein the camera device (33) has at least one camera lens (420) configured to capture an image and the captured image is transmitted to internet network by a wired or wireless manner; wherein the camera device (33) has at least one second engagement part (330a) disposed on a peripheral edge thereof, and under a condition that the second engagement part (330a) is engaged into one of the plurality of the first engagement parts (320a) of the positioning ring (320), the camera device (33) is fixed in the positioning ring (320) and the camera lens (420) is kept at a shooting angle; wherein under a condition that the camera device (33) is rotated by an external force and the second engagement part (330a) is deformed to escape from the first engagement part (320a), the camera device (33) is rotatable about a center of the positioning ring (320), and after the second engagement part (330a) is moved to be engaged with another first engagement part (320a), the camera device (33) is fixed in the positioning ring (320) again to keep the camera lens (420) at another shooting angle, and an angle difference between the two shooting angles is equal to an angle interval between the two adjacent first engagement parts (320a).

2. The network camera according to claim 1, wherein the camera device (33) comprises:
a back cover (41) having a receiving groove (410) recessed at an inner side thereof, and a plurality of first fastening parts (411) disposed thereon and adjacently to a peripheral edge thereof;
a camera module (42) mounted in the receiving groove (410) and at least comprising the camera lens (420) and a network unit which is electrically connected to the camera lens (420) and configured to upload the image captured by the camera lens (420) to internet network; and
a front cover (43) having a structure matching with the back cover and configured to be positioned on the inner side of the back cover (41) to shield the receiving groove (410), and the front cover (43) having a camera hole (430) disposed at an outer side thereof and corresponding in position to the camera lens (420), and the second engagement part (330a) and a plurality of second fastening parts (431) disposed on an inner side thereof and adjacently to a peripheral edge thereof and extended towards the back cover (41), wherein an extension length of one of the second fastening parts (431) is larger than that of the second engagement part (330a), and under a condition that the plurality of first fastening parts (411) and the plurality of second fastening parts (431) are fastened with each other to assemble the front cover (43) and the back cover (41) integrally, the camera device (33) is rotatably positioned in the positioning ring (320) and the second engagement part (330a) is exposed to the peripheral edge of the camera device (33).

3. The network camera according to claim 2, wherein the plurality of second fastening parts (431) and the second engagement part (330a) are closer to the central of the camera device (33) than the peripheral edges of the front cover (43) and the back cover (41), so that under a condition that the front cover (43) and the back cover (41) are assembled integrally, a circular groove (331) is formed on the peripheral edge of the camera device (33) and has a structure matching with the positioning ring (320), and the second engagement part (330a) is exposed to the circular groove (331).

4. The network camera according to claim 3, wherein each of the first engagement parts (320a) is a groove in structure, the second engagement part (330a) is a sheet in structure, and the sheet has an end fastened on the inner side of the front cover (43), the other end movably extended towards the back cover (41), and an engagement member (330b) protruded thereon.

5. The network camera according to claim 4, wherein each of the first engagement parts (320a) has guide bevels (320b) respectively disposed at two corresponding side edges thereof, an engagement member (330b) of the second engagement part (330a) has press bevels (330c) respectively disposed at two corresponding side edges thereof, and each of the press bevels (330c) has a structure matching with each of the guide bevels (320b), and when the camera device (33) is rotated by the external force, the second engagement part (330a) is deformed along one of the guide bevels (320b).

6. The network camera according to claim 5, wherein the main frame (32) is pivotally connected on a pivoting part (310) of the base by a bottom end thereof, so as to be rotatable about the pivoting part (310).
